# EUROPÄISCHE PATENTANMELDUNG

(11) **EP 2 757 300 A1**
(43) Veröffentlichungstag der Anmeldung: **23.07.2014**
(21) Anmeldenummer: 14151485.1
(22) Anmeldetag: 16.01.2014
(51) Int. Cl.: F16L 37/32, F16L 37/12

(54) **Kupplung**

(30) Priorität: 16.01.2013 DE 102013000583
(71) Anmelder: SVT Gmbh, 58332 Schwelm (DE)
(72) Erfinder: Mertens, Klaus, 58640 Iserlohn (DE); Kniesche, Andreas, 59439 Holzwickede (DE)
(74) Vertreter: Schulz, Björn

(57) **Zusammenfassung**

Die vorliegende Erfindung betrifft eine Schiffs-Bunkervorrichtung zum Betanken eines Schiffes mit einem bevorzugt kryogenem Treibstoff, insbesondere flüssigem LNG, miteiner Anschlusskupplung (2), die gleichzeitig eine Sicherheitstrennkupplung ist, wobei die Anschlusskupplung (2) ein erstes Anschlusskupplungsteil (3) aufweist, welches mit dem zu betankenden Schiff verbunden ist und dort verbleibt, und die Anschlusskupplung (2) ein zweites Anschlusskupplungsteil (4) aufweist, welches mit einer den zu bunkernden Treibstoff zuführenden Betankungsvorrichtung verbunden ist, an der das zweite Anschlusskupplungsteil (4) verbleibt. Des Weiteren wird ein Verfahren zum sicheren Bunkern von LNG-Treibstoff bei einem Schiff mit den folgenden Schritten vorgeschlagen:
- gasdichtes Koppeln eines ersten Anschlusskupplungsteils (3) mittels einer Spannvorrichtung (6) an ein zweites Anschlusskupplungsteil (4) und dabei Herstellen einer Fluidverbindung zum Bunkern von LNG in einem Schiffstank aus einem Vorratstank,
- mit dem Koppeln gleichzeitiges Spannen und Öffnen von Ventilen einer Sicherheitstrennkupplung, die in der Anschlusskupplung (2) integriert ist,
- Bunkern von LNG über die geschlossene Anschlusskupplung (2) im Schiffstank,
- Entkoppeln des ersten und des zweiten Anschlusskupplungsteils (3, 4) mittels eines Antriebs mit Verschließen der Ventile der Sicherheitstrennkupplung und
- Trennen des ersten und des zweiten Anschlusskupplungsteil (3 4) voneinander, nachdem die Ventile geschlossen sind.

## Beschreibung

Die vorliegende Erfindung betrifft eine Schiffs-Bunkervorrichtung zum Betanken eines Schiffes mit einem gas- oder flüssigförmigen Treibstoff, insbesondere mit einem kryogenen Treibstoff wie LNG. Des Weiteren betrifft die Erfindung ein Anschlusskupplungsteil mit oder ohne Spannvorrichtung für die vorgeschlagene Schiffs-Bunkervorrichtung, eine Spannvorrichtung dafür sowie ein Verfahren zum sicheren Bunkern von kryogenem Treibstoff, insbesondere LNG-Treibstoff bei einem Schiff.

Üblicherweise wird beim Bunkern von Schiffe Schweröl benutzt, welches aufgeheizt dem Schiffstank zugeführt wird. Dieser Treibstoff weist jedoch eine Vielzahl an Problemen auf, einerseits durch dessen Neigung, bei Abkühlung zu verhärten. Zum anderen erlauben immer weitere Abgasverschärfungen den Einsatz derartiger Treibstoffe in immer weniger Zielhäfen. Daher wird versucht, sich von diesem Treibstoff zu lösen und andere, insbesondere weniger umweltschädliche Treibstoffe bei der Schiffsbebunkerung einsetzen zu können.

Aufgabe der vorliegenden Erfindung ist es, insbesondere eine Betankung mit LNG, aber auch anderen kryogenen Treibstoffen beim Bunkern sicher ermöglichen zu können.

Diese Aufgabe wird mit einer Schiffs-Bunkervorrichtung mit den Merkmalen des Anspruches 1, mit einem Anschlusskupplungsteil mit den Merkmalen des Anspruches 13, mit einer Spannvorrichtung mit den Merkmalen des Anspruches 14, mit einer Verwendung mit den Merkmalen des Anspruches 15 bzw. 16 wie auch mit einem Verfahren mit den Merkmalen des Anspruches 17 gelöst. Weitere vorteilhafte Ausgestaltungen und Weiterbildungen gehen aus den jeweiligen nachfolgenden Unteransprüchen wie aber auch aus der nachfolgenden Beschreibung näher hervor. Die jeweiligen unabhängigen Ansprüche sind ein erster Vorschlag, die Erfindung zu definieren. Daher können ein oder mehrere Merkmale dieser unabhängigen Ansprüche jeweils durch ein oder mehrere zusätzliche Merkmale präzisiert werden oder aber durch ein oder mehrere andere Merkmale aus der nachfolgenden Beschreibung wie auch aus den Figuren ersetzt werden.

Es wird eine Schiffs-Bunkervorrichtung zum Betanken eines Schiffes mit einem bevorzugt kryogenen Treibstoff vorgeschlagen, die zumindest die folgenden Komponenten aufweist:
- eine Anschlusskupplung, die gleichzeitig eine Sicherheitstrennkupplung ist, wobei die Anschlusskupplung ein erstes Anschlusskupplungsteil aufweist, welches mit dem zu betankenden Schiff verbunden ist und dort verbleibt, und
- die Anschlusskupplung ein zweites Anschlusskupplungsteil aufweist, welches mit einer den zu bunkernden Treibstoff zuführenden Betankungsvorrichtung verbunden ist, an der das zweite Anschlusskupplungsteil verbleibt,
- mit einer Führung zum Lage-definierten axialen Annähern und Verschließen des ersten und des zweiten Anschlusskupplungsteils zur Anschlusskupplung im zusammengekoppelten Zustand,
- mit einer lösbaren Verspannung der Anschlusskupplung mittels einer Spannvorrichtung, die ein fluiddichtes Verkuppeln des ersten und des zweiten Anschlusskupplungsteils über einen jeweiligen zugehörigen Flansch sicherstellt,
- mit einer Kombination von Sicherheitstrennkupplung und Anschlusskupplung, bei der das erste Anschlusskupplungsteil ein erstes Verschlussteil der Sicherheitstrennkupplung und das zweite Anschlusskupplungsteil ein zweites Verschlussteil der Sicherheitstrennkupplung aufweist, wobei das erste und das zweite Verschlussteil jeweils einen fluidführenden Abschnitt einer Treibstoffleitung gegen ein unbeabsichtigtes Auslaufen des zu bunkernden Treibstoffs sichern,
- mit einem automatischen Öffnen und einem automatischen Schließen des jeweiligen Abschnitts mittels des jeweiligen Verschlussteils bei einem Trennen und einem Schließen der Anschlusskupplung.

Durch die jeweils getrennte Anordnung von erstem und zweitem Anschlusskupplungsteil und damit auch erstem Verschlussteil und zweitem Verschlussteil an jeweils getrennten Orten wird ermöglicht, zur Betankung hin die Sicherheit erhöhen zu können. Würde ansonsten nur eine einfache Verbindung mit einer Bunkeranlage hergestellt, in der eventuell eine Sicherheitstrennvorrichtung vorgesehen sein würde, würde bei Trennung dieser einen Sicherheitstrennvorrichtung immer ein Teil am Schiff verbleiben, was ansonsten zum Beispiel zu einer Verladearm-Vorrichtung gehören würde. Zum anderen würde durch eine derart abgesetzte Sicherheitstrennvorrichtung auch immer nur dann eine Trennung erfolgen, wenn die Störung sich bis zu dem Ort dieser Sicherheitsrennvorrichtung fortgepflanzt haben würde. Durch die Lokalisierung wie vorgeschlagen wird hingegen ermöglicht, die Trennung von Schiff zu Verladearm oder Schlauchvorrichtung genau an derjenigen Stelle durchzuführen, an der auch Störkräfte auftreten können, zum Beispiel beim Rollen nach Festmachen im Hafen oder bei der Bunkerung auf Rede. Dabei ist üblicherweise die Betankungsvorrichtung feststehend, zumindest aber weniger Roll- und Kippbewegungen in der Regel ausgesetzt wie das zu betankende Schiff. Kommt es zu einer zu hohen Krafteinwirkung zum Beispiel durch Schiffsbewegung, trennt die Sicherheitstrennkupplung dann genau zwischen den beiden. Bei der Verladung von kryogenem Treibstoff wird dadurch verhindert, dass unkontrolliert kryogener Treibstoff entweichen kann. Außerdem wird durch diese lokalisierte Trennung ein erneutes Kuppeln sofort wieder möglich. Früher hingegen wäre es notwendig gewesen, die Bauteile voneinander zu trennen, hierfür den jeweils noch enthaltenen Treibstoff in geeigneter Weise abpumpen zu müssen, diejenigen Bauteile wieder dort anzubringen, wo sie zugehörten, diese dann zu prüfen und erst nach erfolgter Prüfung und erneutem Anschließen mit dem weiteren Bunkern fortfahren zu können. Demgegenüber ist die vorgeschlagene Kombination von Kupplung und integrierter Sicherheitstrennvorrichtung nach erfolgter Auslösung viel schneller wieder zum Einsatz zu bringen.

Damit ist eine Erhöhung der Sicherheit erreichbar, die insbesondere für Treibstoffe wichtig ist, die sofort an der Atmosphäre unter Normalbedingungen verdampfen. Die Trennung so wie vorgeschlagen lässt bauartbedingt nur geringe Mengen an zum Beispiel LNG frei, nämlich nur diejenige Menge, die zwischen den beiden Verschlussteilen frei verbleiben würde. Das aber ist sehr viel weniger als mit anderen, an anderen Orten angeordneten Sicherheitstrennvorrichtungen möglich wäre.

Die Nutzung der vorgeschlagenen Schiffs-Bunkervorrichtung ermöglicht somit, dass zum Beispiel eine erste Sicherheitstrennvorrichtung in der landseitigen Betankungsanlage vorgesehen ist und dort verbleibt, eine zweite Sicherheitstrennvorrichtung jedoch zusätzlich durch das Ankoppeln mit dem Schiff geschaffen wird. Daneben besteht die Möglichkeit, dass zum Beispiel eine dritte Sicherheitstrennvorrichtung zum Beispiel in eine Anschlussgruppe integriert ist, die bei Nutzung einer Verladearm-Vorrichtung zum Einsatz kommen kann.

Mittels der Führung zum Lage-definierten axialen Annähern und Verschließen des ersten und des zweiten Anschlusskupplungsteils zur Anschlusskupplung im zusammengekoppelten Zustand ist sichergestellt, dass bei korrektem Relativbewegen auch diejenige Position erreicht wird, die angestrebt wird. Ein Verkanten, Klemmen oder ähnliches wird durch die Führung verhindert. Bevorzugt ist diejenige Kraft, die zum Verschließen aufgebracht wird, auch definierbar. Das ermöglicht, diese einstellen und gegebenenfalls auch überwachen zu können. Wird eine abweichend hohe oder auch kleine Kraft benötigt, kann daraus zum Beispiel auf einen Schaden geschlossen werden. Derartiges ist mit einer geeigneten Vorrichtung überwachbar. Gleiches kann auch für den umgekehrten Vorgang gelten, dem Lösen. Vorzugsweise erfolgt das Lösen mit einer lösbaren Verspannung der Anschlusskupplung mittels einer Spannvorrichtung, die ein fluiddichtes Verkuppeln des ersten und des zweiten Anschlusskupplungsteils sicherstellt. Das fluiddichte Verkuppeln kann beispielweise durch das aneinander Anliegen eines jeweiligen zugehörigen Flanschs beider Anschlusskupplungsteile beispielweise sichergestellt werden.

Bevorzugt ist es, wenn die Spannvorrichtung einen Antrieb, vorzugsweise einen Hydraulikantrieb aufweist, mittels dem das erste und das zweite Anschlusskupplungsteil aufeinander zu und voneinander weg verfahrbar sind. Dieses hat den Vorteil dass durch den Antrieb eine definierte Kraft aufgebracht werden kann. Dadurch werden Fehlbedienungen und Schädigungen zum Beispiel mit Einsatz von zu hoher Kraft vermieden. Der Antrieb kann jedoch auch motorgetrieben sein oder auch pneumatisch erfolgen. Auch Kombinationen unterschiedlicher Antriebe können zum Einsatz gelangen.

Eine bevorzugte Ausgestaltung sieht vor, dass zumindest zwei angetriebene Fanghaken der Spannvorrichtung zusammenwirken, wobei die Fanghaken jeweils eine Kopplung mit einem der beiden Anschlusskupplungsteile aufweisen, wobei mittels des Antriebs die Fanghaken angetrieben sind und ein Zuziehen und Verspannen mit dem anderen der beiden Anschlusskupplungsteile ermöglichen und wobei ein Trennen des ersten und des zweiten Anschlusskupplungsteils mittels eines Auseinanderziehen mittels der angetriebenen Fanghaken erfolgt.

Eine weitere bevorzugte Ausführung weist eine Bewegung auf, bei der eines der beiden Anschlusskupplungsteile zum anderen Kupplungsteil hin bzw. vom anderen Kupplungsteil weg bewegt wird mittels des Antriebs, wobei das andere Anschlusskupplungsteil bevorzugt ortsfest stehen bleibt.

Weiterhin ist beispielsweise vorgesehen, dass die Spannvorrichtung eine mechanische Verriegelung, vorzugsweise einen Verriegelungsbolzen, als Sicherung der geschlossenen Anschlusskupplung aufweist, wobei die Sicherheitstrennkupplung weiterhin auslösefähig ist. Bevorzugt ist die mechanische Verriegelung händisch zu öffnen.

Mit einer Kombination von Sicherheitstrennkupplung und Anschlusskupplung, bei der das erste Anschlusskupplungsteil ein erstes Verschlussteil der Sicherheitstrennkupplung und das zweite Anschlusskupplungsteil ein zweites Verschlussteil der Sicherheitstrennkupplung aufweist, gelingt es, dass das erste und das zweite Verschlussteil jeweils einen fluidführenden Abschnitt einer Treibstoffleitung gegen ein unbeabsichtigtes Auslaufen des zu bunkernden Treibstoffs sichern. Dazu umgibt die Anschlusskupplung die Sicherheitstrennkupplung auch örtlich und ummantelt diese bevorzugt direkt. So kann die Anschlusskupplung beispielsweise jeweils zumindest eine Anliegefläche für das erste wie auch das zweite Verschlussteil zur Verfügung stellen. Auch kann die Anschlusskupplung jeweils eine Abstützung für das erste bzw. zweite Verschlussteil zur Verfügung stellen, so dass zum Beispiel federbetätigte Komponenten zum Einsatz gelangen können.

Eine Weiterbildung sieht vor, dass eine Bewegung eines ersten Ventils als erstes Verschlussteil und eines zweiten Ventils als zweites Verschlussteil zum Öffnen oder Verschließen des jeweiligen fluidführenden Abschnitts der Fluidleitung im ersten und im zweiten Anschlusskupplungsteil mechanisch gekoppelt ist mit einer Relativbewegung zwischen dem ersten und dem zweiten Anschlusskupplungsteil.

Mit einer derartigen Weiterbildung lässt sich ein automatisches Öffnen und ein automatischen Schließen des jeweiligen Abschnitts mittels des jeweiligen Verschlussteils bei einem Trennen und einem Schließen der Anschlusskupplung umsetzen. Andere Ausgestaltungen sehen vor, dass dieses sensorgesteuert mittels Antrieb erfolgt. Auch kann die mechanische Kopplung der Komponenten zueinander anders vorliegen. Bevorzugt ist es, dass durch Automatisch bedeutet in diesem Zusammenhang, dass es bei einer Trennung bzw. einem Zusammenbringens und Koppelns der Anschlusskupplung auch ein Verschließen bzw. Öffnen der Fluidleitung eintreten muss.

Weiterhin ist es bevorzugt, wenn die Spannvorrichtung am Außenumfang von einem der beiden Anschlusskupplungsteile ansetzt, wobei die Anschlusskupplungsteile wie auch die Verschlussteile axialparallel zu- und ineinander bewegbar angeordnet sind.

Eine weitere Ausgestaltung einer Schiffs-Bunkervorrichtung sieht vor, dass die Anschlusskupplungsteile zueinander verdrehbar angeordnet sind. Bevorzugt werden die Anschlusskupplungsteile durch Verdrehen geschlossen. Beispielweise kann hierfür ein Bajonettverschluss, ein Schraubverschluss oder ein sonstiger, ein Drehmoment einsetzender Verschluss genutzt werden. Auch besteht die Möglichkeit, dass

Weiterhin ist beispielsweise vorgesehen, dass zumindest ein Anschlusskupplungsteil eine Kälteisolierung aufweist. Dieses verhindert, dass ein großer Materialverzug durch Kälteeinfluss zum Beispiel bei freiwerdendem kryogenen Treibstoff eintritt.

Mit er vorgeschlagenen Lösung ist es möglich, dass die Schiffs-Bunkervorrichtung nicht nur eine Druckbetankung erlaubt. Insbesondere ist es möglich, dass ein Drucktank an die Schiffs-Bunkervorrichtung angeschlossen ist, wobei der Drucktank unter Druck stehendes LNG enthält. Der Drucktank ist hierbei bevorzugt der zu befüllende Treibstofftank an Bord des Schiffes.

Eine weitere Sicherheitskomponente sieht zum Beispiel vor, dass jedes Anschlusskupplungsteil eine Kennzeichnung und gemeinsame Passung aufweist, die auf einen speziellen Bunkertreibstoff, vorzugsweise LNG, hinweist.

Auch kann jedes Anschlusskupplungsteil mit oder ohne Spannvorrichtung für eine Schiffs-Bunkervorrichtung wie oben und nachfolgend noch näher beschrieben als Nachrüstteil vorgesehen sein. So kann zum Beispiel eine nachträgliche Auf- wie auch Umrüstung erfolgen, insbesondere auch bei BiFuel-Betrieb an Bord eines Schiffes.

Gleiches gilt auch für eine Spannvorrichtung für eine Schiffs-Bunkervorrichtung, die bevorzugt auch als Nachrüstteil vorgeschlagen wird. Damit kann zum Beispiel eine schon bestehende Sicherheitstrennvorrichtung nachträglich zu einer vorgeschlagenen Lösung beitragen.

Die Verwendung einer vorgeschlagenen Schiffs-Bunkervorrichtung zur Bunkerung mit LNG eröffnet wiederum die Möglichkeit, dass ein Schiff sehr sicher diesen Treibstoff an Bord nehmen kann. Risiken durch Handhabungsfehler können durch die sichere Trennung der Anschlusskupplung mit gleichzeitigem Verschließen der Fluidleitung weiter begrenzt werden.

Insbesondere die Verwendung eines Anschlusskupplungsteil mit oder ohne Spannvorrichtung oder einer Spannvorrichtung für eine Schiffs-Bunkervorrichtung wie vorgeschlagen als Nachrüstteil bei einer LNG-Bunkerung ermöglicht beispielsweise Reedereien, der aktuellen Gesetzeslage in dem jeweiligen Zielhafen entsprechenden Treibstoff bunkern und später auch verfeuern zu können. Die Nachrüstung für den Schiffseigner hält sich dadurch in Grenzen, dass dieser auf einen Tankanschlussstutzen eines Schiffes nur ein Anschlusskupplungsteil wie vorgeschlagen anzuflanschen braucht. Er ist dann sofort in der Lage, den Sicherheitsstandards bei LNG-Betankung zu genügen. Werden wiederum andere Anschlusskupplungen in anderen Zielhäfen genutzt, muss er nur das passende Anschlusskupplungsteil verwenden. Da der Tankanschlussstutzen vorzugsweise durch ein eigenes Ventil absperrbar ist, kann der Austausch des Anschlusskupplungsteils gefahrlos erfolgen.

Gemäß einem weiteren Gedanken der Erfindung wird ein Verfahren zum sicheren Bunkern von LNG-Treibstoff bei einem Schiff mit den folgenden Schritten vorgeschlagen:
- gasdichtes Koppeln eines ersten Anschlusskupplungsteils mittels einer Spannvorrichtung an ein zweites Anschlusskupplungsteil und dabei Herstellen einer Fluidverbindung zum Bunkern von LNG in einem Schiffstank aus einem Vorratstank,
- mit dem Koppeln gleichzeitiges Spannen und Öffnen von Ventilen einer Sicherheitstrennkupplung, die in der Anschlusskupplung integriert ist,
- Bunkern von LNG über die geschlossene Anschlusskupplung im Schiffstank,
- Entkoppeln des ersten und des zweiten Anschlusskupplungsteils mittels eines Antriebs mit Verschließen der Ventile der Sicherheitstrennkupplung und
- Trennen des ersten und des zweiten Anschlusskupplungsteil voneinander, nachdem die Ventile geschlossen sind.

Bevorzugt wird für dieses Verfahren eine Anschlusskupplung mit integrierter Sicherheitstrennkupplung vorgesehen, wie sie oben wie auch noch nachfolgend näher im Zusammenhang mit der Schiffs-Bunkervorrichtung beschrieben ist. Insbesondere kann mit dem Verfahren die vorgeschlagene Schiffs-Bunkervorrichtung betreiben werden.

Die nachfolgenden Zeichnungen mit den jeweils darin enthaltenen Figuren zeigen in beispielhafter Ausgestaltung verschiedene Merkmale der Erfindung. Die jeweiligen Ausgestaltungen sollen jedoch nicht beschränkend sondern nur beispielhaft sein. Ein oder mehre Merkmale aus einer oder verschiedenen Figuren können dabei zusammen mit anderen Merkmalen aus anderen Figuren wie auch aus der obigen und nachfolgenden Beschreibung zu weiteren Ausgestaltungen verknüpft werden. Es zeigen:
- Fig. 1: eine Schiffs-Bunkervorrichtung mit einer Anschlusskupplung, die gleichzeitig eine Sicherheitstrennkupplung gemäß der Erfindung ist,
- Fig. 2: eine schematische Darstellung der Anschlusskupplung mit integrierter Sicherheitstrennkupplung,
- Fig. 3: zwei angetriebene Fanghacken einer Spannvorrichtung im Zusammenspiel mit einer vorgeschlagenen Anschlusskupplung
- Fig. 4, 5, 6 und 7: einen Ablauf bei einem Trennen der Anschlusskupplung und dem Beginn eines Wiederzusammenfügens der Anschlusskupplung,
- Fig. 8 und 9: eine andere beispielhafte Ausgestaltung einer vorgeschlagenen Anschlusskupplung mit Sicherheitstrennkupplung
- Fig. 10: eine weitere Schnittdarstellung einer Schiffs-Bunkervorrichtung mit Anschlusskupplung und Sicherheitstrennkupplung und Fanghacken
- Fig. 11: eine im Wesentlichen mit Figur 10 übereinstimmende schematische Darstellung der Schiffs-Bunkervorrichtung wie zuvor mit einer Verriegelung des Fanghackens.

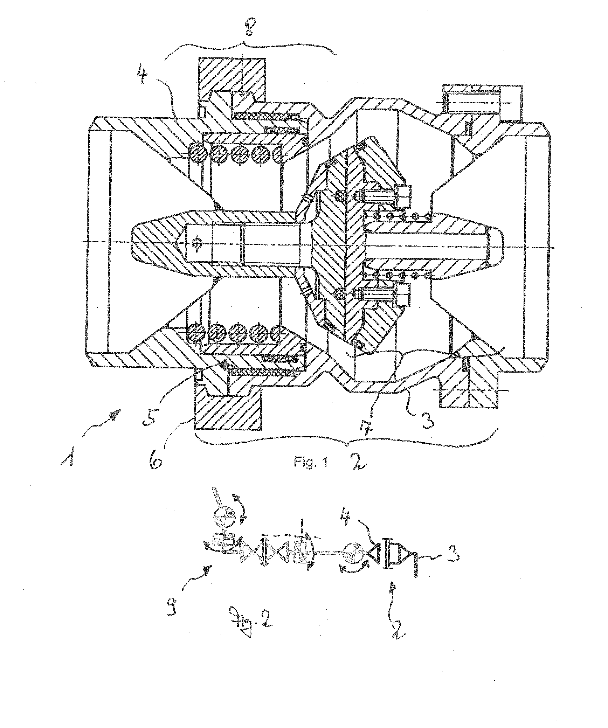

Figur 1 zeigt in schematischer Ansicht eine vorgeschlagene Schiffs-Bunkervorrichtung 1 ausschnittsweise. Eine Anschlusskupplung 2 weist ein erstes Anschlusskupplungsteil 3 auf, welches beim Schiff verbleibt. Des Weiteren weist die Anschlusskupplung 2 ein zweites Anschlusskupplungsteil 4 auf, welches mit einer den zu bunkernden Treibstoff zuführenden Betankungsvorrichtung, insbesondere einer Verladearm-Vorrichtung verbunden ist, und dort verbleibt. Diese ist bei dieser schematischen Ansicht nicht näher dargestellt. Des Weiteren ist eine Führung 5 zum Lage-definierten axialen Annähern und Verschließen des ersten Anschlusskupplungteils 3 und des zweiten Anschlusskupplungteils 4 zur Anschlusskupplung 2 vorgesehen. Die Führung wird zum Beispiel in dieser Ausgestaltung als Axialführung durch eine Innengestalt des ersten Anschlusskupplungsteils 3 und einer komplementären Außengestaltung des zweiten Anschlusskupplungteils 4 gebildet. Dargestellt ist schematisch ein Teil einer Spannvorrichtung 6, mittels der ein lösbares Verspannen der Anschlusskupplung 2 erfolgt. Das erste Anschlusskupplungsteil 3 wie auch das zweite Anschlusskupplungsteil 4 weisen hierzu jeweils eine flanschförmige Oberfläche auf, die ein axiales aufeinander zu Fahren und schließlich Kontaktieren dieser Flanschoberflächen mit anschließender Sicherung durch die Spannvorrichtung 6 erlaubt. Die schematisch dargestellte Ansicht aus Figur 1 zeigt des Weiteren, dass innerhalb der Anschlusskupplung 2 und mit dem jeweiligen Anschlusskupplungsteilen 3, 4 zusammenhängend jeweilige Verschlussteile der Sicherheitstrennkupplung vorgesehen sind. So weist beispielhaft das erste Anschlusskupplungsteil 3 ein erstes Verschlussteil 7 auf. Das zweite Anschlusskupplungsteil 4 wiederum weist ein zweites Verschlussteil 8 auf. Erstes Verschlussteil 7 und zweites Verschlussteil 8 sind jeweils in der Lage, einen fluidführenden Abschnitt einer Treibstoffleitung gegen ein unbeabsichtigtes Auslaufen des zu bunkernden Treibstoffes verschließen zu können. Dadurch erfolgt ein Sichern.

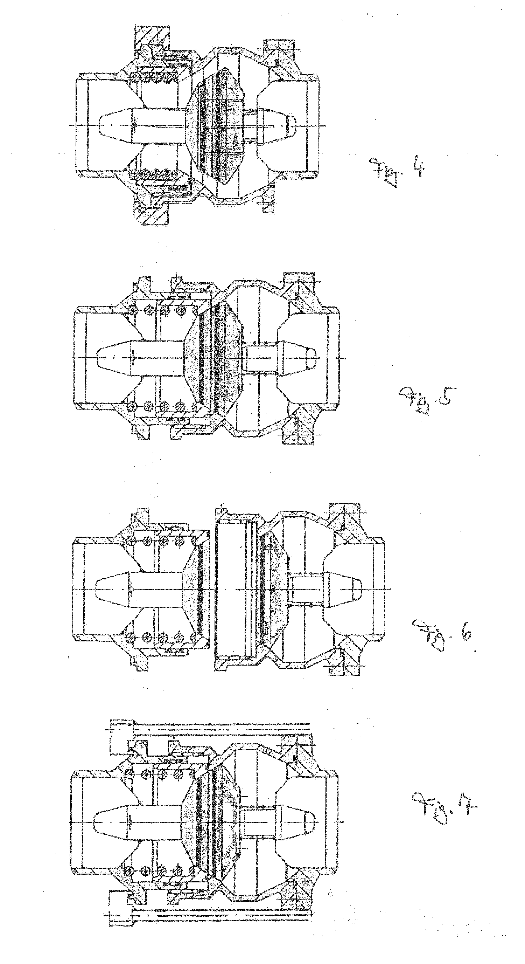

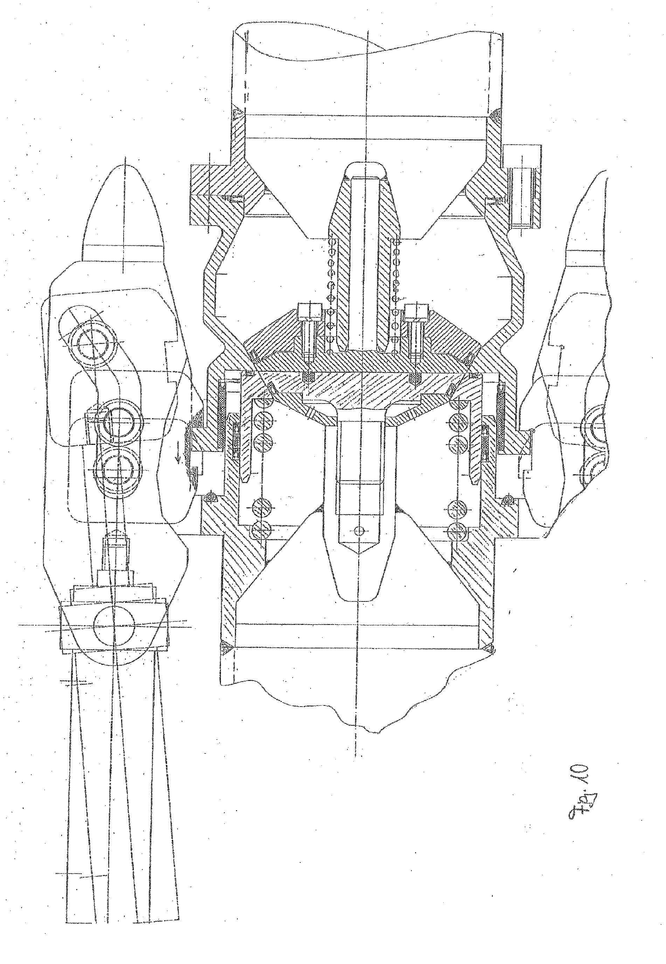

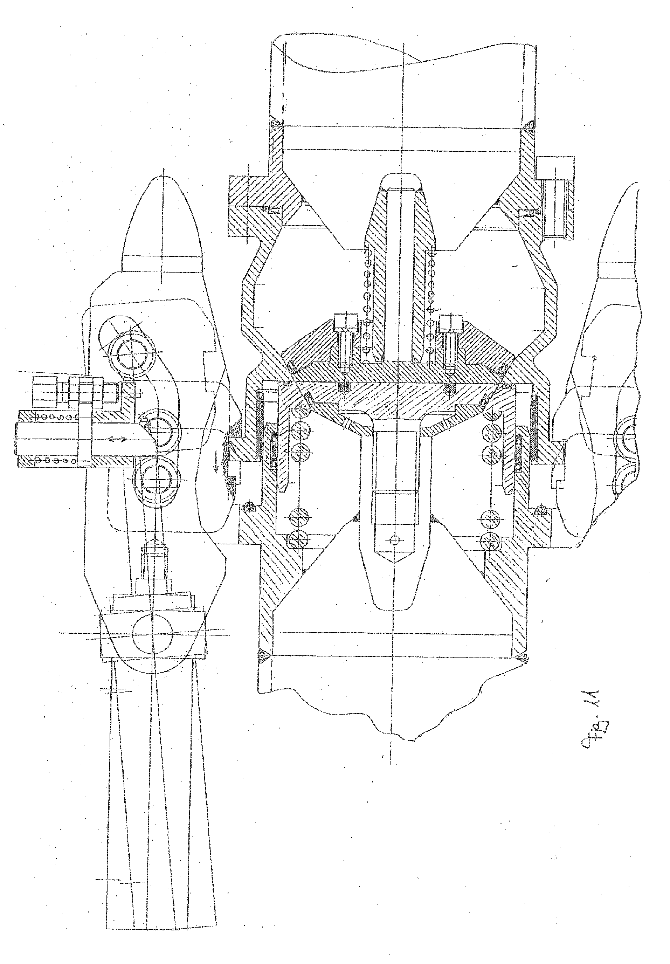

Nachfolgend soll beispielhaft anhand der Figur 1, aber auch Figur 10 bzw. Figur 11 näher erläutert werden, wie die vorgeschlagene Schiffs-Bunkervorrichtung funktioniert. Hilfreich ist hierbei auch, einen Blick auf die Abläufe der Figuren 4 bis 7 zu werfen.

Das erste Anschlusskupplungsteil 3 funktioniert als Mutterteil der Kupplung und ist fest am Schiff installiert und verbleibt dort. Ist es dort angeflanscht, ist auch die entsprechende zugehörige Fluidleitung sicher verschlossen. Zusätzlich kann noch zum Beispiel eine weitere Verschlusskappe vorgesehen sein, die am ersten Anschlusskupplungsteil 3 bevorzugt fluiddicht angeordnet wird. Das zweite Anschlusskupplungsteil 4 hingegen funktioniert als ein Vaterteil der Anschlusskupplung 2 und ist am Verladearm einer Verladearm-Vorrichtung oder aber auch an einem Schlauchende der Betankungsvorrichtung installiert. Das Vaterteil kann beispielsweise zusätzliche Einführschrägen aufweisen. Beim Anschließen helfen diese, beide Anschlusskupplungsteile 3, 4 in einer axialen Flucht voreinander zu positionieren. Weiterhin besitzt das Vaterteil, in diesem Falle das zweite Anschlusskupplungsteil 4, ein oder mehrere Antriebe, mittels der die Spannvorrichtung 6 angetrieben wird. Vorzugsweise weist die Spannvorrichtung 6 hierzu Fanghacken auf, die ein axiales Heranziehen ermöglichen. Bei diesem Heranziehen sorgen beispielsweise gebogene Führungsnuten in den Fanghacken zusammen mit entsprechenden Führungsrollen dafür, dass die Fanghacken erst einklappen und dabei einen entsprechenden Bund am Mutterteil der Kupplung erfassen und dann das Vaterteil an diesen Bund heranführen. Wie dieses funktioniert, geht insbesondere aus Figur 10 wie auch aus Figur 11 entsprechend hervor. Bei dieser Bewegung werden innere Ventilteller und Schiebehülsen des ersten Verschlussteils 7 bzw. des zweiten Verschlussteils 8 gegen ihre Federvorspannung geöffnet. Ist das landseitige Vaterteil der Kupplung vollständig an das schiffsseitige Mutterteil herangezogen worden, rastet ein federgespannter Verrieglungsbolzen ein, wie er beispielsweise aus Figur 11 hervorgeht. Damit wird die Anschlusskupplung 2 gesichert gegen ein unbeabsichtigtes Öffnen, etwa bei einem Energieausfall. Diese Verriegelung kann so wie aus Figur 11 hervorgehend ausgeführt sein. Es besteht jedoch ebenfalls die Möglichkeit, dass eine Verriegelung in anderer Weise vorgesehen ist.

Soll es beispielsweise zu einer Nottrennung kommen und es ist eine Verriegelung vorgesehen, so wie beispielsweise in Figur 11 dargestellt, wird zunächst der dort vorhandene federgespannte Verriegelungsbolzen zum Beispiel hydraulisch geöffnet. Anschließend arbeiten die Fanghackenantriebe umgekehrt, dass heißt, sie schicken die Fanghacken in Richtung Mutterteil. Das bedeutet, der Antrieb der Spannvorrichtung bzw. die Antriebe der Spannvorrichtung sind in der Lage, eine Bewegung in die eine wie auch in die entgegengesetzte Richtung durchführen zu können. Somit besteht die Möglichkeit, dass der oder die Antriebe in eine Richtung eine Druckkraft und in eine dazu entgegengesetzte Richtung eine Zugkraft aufbringen können. Bei der Ausgestaltung, wie sie beispielsweise aus Figur 10 und 11 hervorgeht, erlauben beispielsweise der oder die Antriebe der Fangvorrichtung, dass die Fanghacken in Richtung Mutterteil geschoben werden durch die Antriebe selbst. Dieses kann beispielsweise direkt erfolgen, indem die Antriebe direkt mit dem oder den Fanghacken gekoppelt sind. Es kann jedoch hierfür ein Getriebe dazwischen geschaltet sein. Beispielsweise kann vorgesehen sein, dass ein kleiner Vorsprung in den Fanghacken dafür sorgt, dass die beiden Anschlusskupplungsteile 3, 4 zwangsweise voneinander entfernt werden. Die Kopplung zwischen den Fanghacken und dem Mutterteil kann jedoch auch in anderer Weise erfolgen. Insbesondere ermöglicht die Spannvorrichtung, dass beim axialen Verfahren der Fanghacken auch das Mutterteil axial entfernt werden kann. Im gleichen Maße, wie Vater- und Mutter sich voneinander entfernen, schließen sich sodann die inneren Ventilteller und Schiebehülsen des ersten Verschlussteils 7 bzw. des zweiten Verschlussteils 8. Es kommt allerdings erst zu einer Trennung vom ersten Anschlusskupplungsteil 3 vom zweiten Anschlusskupplungsteil 4, wenn das erste und zweite Verschlussteil 7, 8 jeweils schon geschlossen sind. Auf diese Weise gelingt es, eine Trockenkupplung erzielen zu können.

Ist die Anschlusskupplung 2 vollständig geschlossen, klappen die Fanghacken wieder aus und geben dem verladerseitigen Vaterteil wieder die volle Bewegungsfreiheit. Damit ist die Anschluss- und Sicherheitstrennkupplung vollständig voneinander getrennt und die Schiffs- Bunkervorrichtung als solches verfügt über ein getrenntes erstes Anschlusskupplungsteil 3 am Schiff und ein zweites Anschlusskupplungsteil 4 an der Betankungsvorrichtung, insbesondere am Verladearm bzw. am Betankungsschlauch.

So wie dargestellt, besteht natürlich ebenfalls die Möglichkeit, dass die Fangvorrichtung nicht am Vaterteil sondern am Mutterteil angeordnet ist. Dann würde das zweite Anschlusskupplungsteil durch die Fangvorrichtung in Richtung des Mutterteils gezogen wie aber auch weggeschoben werden.

Figur 2 zeigt in einer beispielhaften Ausgestaltung eine schematische Ansicht der Schiffs-Bunkervorrichtung mit der Anschlusskupplung 2, wobei das erste Anschlusskupplungsteil 3 wie auch das zweite Anschlusskupplungsteil 4 getrennt voneinander dargestellt sind. Über eine Anschlussvorrichtung 9 kann das zweite Anschlusskupplungsteil 4 gesichert an das erste Anschlusskupplungsteil 3 herangeführt werden. Bevorzugt wird eine Anschlussvorrichtung 9 verwendet, die so wie dargestellt verschiedene Drehebenen aufweist. Die hier dargestellte Anschlussvorrichtung 9 weist vier Gelenkpunkte auf, wobei diese bevorzugt jeweils eine Drehachse aufweisen. Weiterhin bevorzugt ist es, wenn die Anschlussvorrichtung 9 zumindest zwei Drehachsen aufweist, die senkrecht zueinander stehen, wie das gestrichelt angedeutet ist.

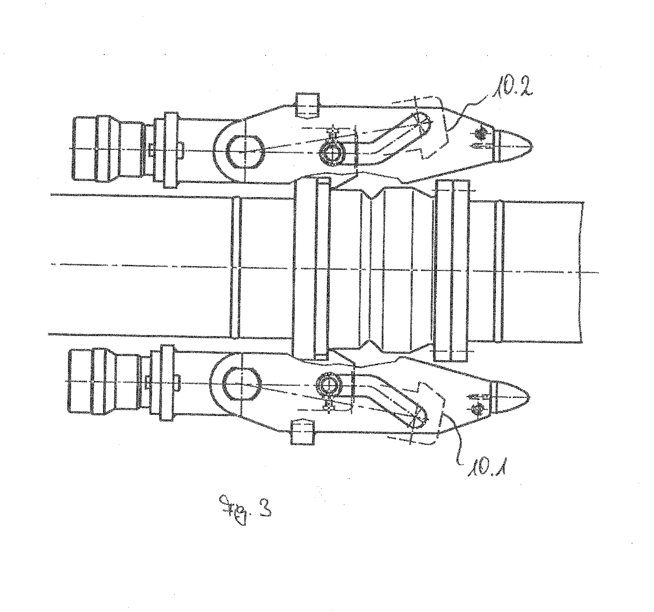

Figur 3 zeigt in beispielhafter Ausgestaltung zwei Fanghacken 10.1, 10.2, mittels denen die oben dargestellte Bewegungsführung zum Zusammenkoppeln des ersten Anschlusskupplungsteils 3 und des zweiten Anschlusskupplungsteils 4, aber auch des Auseinanderziehens durch Mitziehen des zweiten Anschlusskupplungsteils 4 ermöglicht ist. Dieses ist durch die verschiedenen Positionen des geöffneten wie auch geschlossenen Fanghackens dargestellt.

Figuren 4 - 7 zeigen nochmals in übersichtlicher Darstellung, wie die Anschlusskupplung gelöst und dann wieder zusammengesetzt wird. Aus Figur 4 ist die Situation hervorgehend, bei der eine LNG-Bunkerung freigegeben ist. Beide Ventilteller sind von ihrem jeweiligen Ventilsitzen abgehoben und das LNG kann dem Schiff zugeführt werden. Das LNG wird gemäß einer ersten Ausgestaltung unter Druck zugeführt, beispielsweise mit einem Druck zwischen 5-10 bar. Gemäß einer anderen Ausgestaltung wird das LNG unter atmosphärischen Druck stehend dem Betriebsstoffbunker des Schiffes zugeführt und entsprechend unter diesem Druck dort gelagert. Figur 5 zeigt, wie die beispielhaft dargestellten Fanghacken gelöst sind und sich die Kupplung langsam löst in ihre Anschlusskupplungsteile. Die Federteller haben zu einem Verschließen der jeweiligen Fluidabschnitte geführt. In Figur 6 ist dargestellt, dass ein Trennen der Anschlusskupplungsteile erst dann möglich ist, wenn tatsächlich der Verschluss der Fluidleitungsabschnitte gesichert ist. Solange bleibt noch ein Kontakt zwischen den jeweiligen Kupplungsteilen bestehen, der insbesondere auch fluiddicht ist. Sollte sich nämlich herausstellen, dass einer der beiden Verschlussvorgänge nicht korrekt ausgeführt wurde, kann zu diesem Zeitpunkt das Trennen der Kupplung ggf. unterbrochen werden und beide Anschlusskupplungsteile wieder gesichert werden. Figur 7 zeigt eine Ausgestaltung, wie sodann wieder ein Zusammenführen der Anschlusskupplungsteile miteinander über einen Antrieb erfolgen kann.

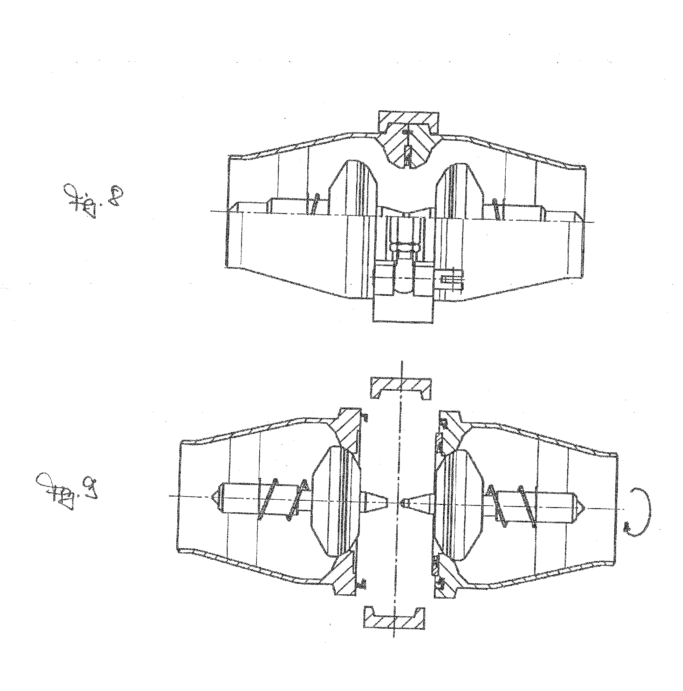

Figur 8 zeigt eine andere Ausgestaltung einer Anschlusskupplung. Hierbei kommen zwei Anschlusskupplungsteile zur Geltung, die nicht über eine axiale sondern über eine Umfangsführung miteinander gesichert werden. Hierzu werden beide Anschlusskupplungsteile relativ zueinander verdreht, um die anschließende Sicherung über die Fangvorrichtung ermöglichen zu können. Beispielsweise kann vorgesehen sein, dass die beiden jeweiligen aufeinander liegenden Flansche der Anschlusskupplungsteile über ein zueinander passendes Gewinde bzw. wie angedeutet Bajonettverschlusssystem verfügen.

Figur 10 und 11 zeigen nochmals in weiterer näherer Ausgestaltung die Möglichkeit, wie die Kombination von Anschlusskupplung und Sicherheitstrennkupplung miteinander kombiniert werden kann unter Berücksichtigung einer Spannvorrichtung in Form von angetriebenen Spannhacken, die ein aktives Zuführen aber auch ein aktives Trennen und damit die Möglichkeit eines Mutterteils wie auch Vaterteils schaffen. Eingezeichnet sind beispielsweise die verschiedenen Dichtungen, die umlaufend sind. Auch sind die unterschiedlichen Funktionsflächen, Abstützungen uns sonstige Details dargestellt, auf die zurückgegriffen werden kann bei der Umsetzung.

## Patentansprüche

1. Schiffs-Bunkervorrichtung zum Betanken eines Schiffes mit einem bevorzugt kryogenem Treibstoff, insbesondere flüssigem LNG, mit:
- einer Anschlusskupplung (2), die gleichzeitig eine Sicherheitstrennkupplung ist, wobei die Anschlusskupplung (2) ein erstes Anschlusskupplungsteil (3) aufweist, welches mit dem zu betankenden Schiff verbunden ist und dort verbleibt, und
- die Anschlusskupplung (2) ein zweites Anschlusskupplungsteil (4) aufweist, welches mit einer den zu bunkernden Treibstoff zuführenden Betankungsvorrichtung verbunden ist, an der das zweite Anschlusskupplungsteil (4) verbleibt,
- mit einer Führung zum Lage-definierten axialen Annähern und Verschließen des ersten und des zweiten Anschlusskupplungsteils (3, 4) zur Anschlusskupplung (2) im zusammengekoppelten Zustand,
- mit einer lösbaren Verspannung der Anschlusskupplung (2) mittels einer Spannvorrichtung (6), die ein fluiddichtes Verkuppeln des ersten und des zweiten Anschlusskupplungsteils (3, 4) sicherstellt, bevorzugt über einen jeweiligen zugehörigen Flansch,
- mit einer Kombination von Sicherheitstrennkupplung und Anschlusskupplung (2), bei der das erste Anschlusskupplungsteil (3) ein erstes Verschlussteil (7) der Sicherheitstrennkupplung und das zweite Anschlusskupplungsteil (4) ein zweites Verschlussteil (8) der Sicherheitstrennkupplung aufweist, wobei das erste und das zweite Verschlussteil (7, 8) jeweils einen fluidführenden Abschnitt einer Treibstoffleitung gegen ein unbeabsichtigtes Auslaufen des zu bunkernden Treibstoffs sichern, vorzugsweise auch beim Öffnen der gekuppelten Anschlusskupplung,
- mit einem automatischen Öffnen und einem automatischen Schließen des jeweiligen Abschnitts mittels des jeweiligen Verschlussteils (7, 8) bei einem Trennen und einem Schließen der Anschlusskupplung.

2. Schiffs-Bunkervorrichtung nach Anspruch 1, **dadurch gekennzeichnet, dass** die Spannvorrichtung (6) einen Antrieb, vorzugsweise einen Hydraulikantrieb aufweist, mittels dem das erste und das zweite Anschlusskupplungsteil (3, 4) aufeinander zu und voneinander weg verfahrbar sind.

3. Schiffs-Bunkervorrichtung nach Anspruch 2, **dadurch gekennzeichnet, dass** zumindest zwei angetriebene Fanghaken (10.1, 10.2) der Spannvorrichtung (6) zusammenwirken, wobei die Fanghaken jeweils eine Kopplung mit einem der beiden Anschlusskupplungsteile aufweisen, wobei mittels des Antriebs die Fanghaken (10.1, 10.2) angetrieben sind und ein Zuziehen und Verspannen mit dem anderen der beiden Anschlusskupplungsteile ermöglichen und wobei ein Trennen des ersten und des zweiten Anschlusskupplungsteils mittels eines Auseinanderziehen mittels der angetriebenen Fanghaken (10.1, 10.2) erfolgt.

4. Schiffs-Bunkervorrichtung nach einem der vorhergehenden Ansprüche 2 oder 3, **dadurch gekennzeichnet, dass** eine Bewegung eines der beiden Anschlusskupplungsteile zum anderen Anschlusskupplungsteil hin bzw. vom anderen Anschlusskupplungsteil weg mittels des Antriebs erfolgt, wobei das andere Anschlusskupplungsteil ortsfest steht.

5. Schiffs-Bunkervorrichtung nach einem der vorhergehenden Ansprüche, **dadurch gekennzeichnet, dass** die Spannvorrichtung (6) eine mechanische Verriegelung, vorzugsweise einen Verriegelungsbolzen, als Sicherung der geschlossenen Anschlusskupplung (2) aufweist, wobei die Sicherheitstrennkupplung weiterhin auslösefähig ist.

6. Schiffs-Bunkervorrichtung nach Anspruch 5, **dadurch gekennzeichnet, dass** die mechanische Verriegelung händisch zu öffnen ist.

7. Schiffs-Bunkervorrichtung nach einem der vorhergehenden Ansprüche, **dadurch gekennzeichnet, dass** eine Bewegung eines ersten Ventils als erstes Verschlussteil (7) und eines zweiten Ventils als zweites Verschlussteil (8) zum Öffnen oder Verschließen des jeweiligen fluidführenden Abschnitts der Fluidleitung im ersten und im zweiten Anschlusskupplungsteil (3, 4) mechanisch gekoppelt ist mit einer Relativbewegung zwischen dem ersten und dem zweiten Anschlusskupplungsteil (3, 4).

8. Schiffs-Bunkervorrichtung nach einem der vorhergehenden Ansprüche, **dadurch gekennzeichnet, dass** die Spannvorrichtung (6) am Außenumfang von einem der beiden Anschlusskupplungsteile ansetzt, wobei die Anschlusskupplungsteile (3, 4) wie auch die Verschlussteile (7, 8) axialparallel zu- und aneinander bewegbar angeordnet sind.

9. Schiffs-Bunkervorrichtung nach einem der vorhergehenden Ansprüche, **dadurch gekennzeichnet, dass** die Anschlusskupplungsteile (3, 4) zueinander verdrehbar angeordnet sind.

10. Schiffs-Bunkervorrichtung nach einem der vorhergehenden Ansprüche, **dadurch gekennzeichnet, dass** zumindest ein Anschlusskupplungsteil (3, 4) eine Kälteisolierung aufweist.

11. Schiffs-Bunkervorrichtung nach einem der vorhergehenden Ansprüche, **dadurch gekennzeichnet, dass** ein Drucktank an die Schiffs-Bunkervorrichtung angeschlossen ist, wobei der Drucktank unter Druck stehendes LNG enthält.

12. Schiffs-Bunkervorrichtung nach einem der vorhergehenden Ansprüche, **dadurch gekennzeichnet, dass** jedes Anschlusskupplungsteil (3, 4) eine Kennzeichnung und gemeinsame Passung aufweist, die auf einen speziellen Bunkertreibstoff, vorzugsweise LNG, hinweist.

13. Anschlusskupplungsteil (3, 4) mit oder ohne Spannvorrichtung (6) für eine Schiffs-Bunkervorrichtung nach einem der vorhergehenden Ansprüche als Nachrüstteil.

14. Spannvorrichtung (6) für eine Schiffs-Bunkervorrichtung nach einem der vorhergehenden Ansprüche als Nachrüstteil.

15. Verwendung einer Schiffs-Bunkervorrichtung nach einem der vorhergehenden Ansprüche zur Bunkerung mit LNG.

16. Verwendung eines Anschlusskupplungsteil (3, 4) mit oder ohne Spannvorrichtung (6) oder eine Spannvorrichtung (6) für eine Schiffs-Bunkervorrichtung nach einem der vorhergehenden Ansprüche als Nachrüstteil bei einer LNG-Bunkerung.

17. Verfahren zum sicheren Bunkern von LNG-Treibstoff bei einem Schiff mit den folgenden Schritten:
- gasdichtes Koppeln eines ersten Anschlusskupplungsteils (3) mittels einer Spannvorrichtung (6) an ein zweites Anschlusskupplungsteil (4) und dabei Herstellen einer Fluidverbindung zum Bunkern von LNG in einem Schiffstank aus einem Vorratstank,
- mit dem Koppeln gleichzeitiges Spannen und Öffnen von Ventilen einer Sicherheitstrennkupplung, die in der Anschlusskupplung (2) integriert ist,
- Bunkern von LNG über die geschlossene Anschlusskupplung (2) im Schiffstank,
- Entkoppeln des ersten und des zweiten Anschlusskupplungsteils (3, 4) mittels eines Antriebs mit Verschließen der Ventile der Sicherheitstrennkupplung und
- Trennen des ersten und des zweiten Anschlusskupplungsteil (3 4) voneinander, nachdem die Ventile geschlossen sind.
